# EUROPEAN PATENT APPLICATION

(11) **EP 3 453 728 A1**
(43) Date of publication of application: **13.03.2019**
(21) Application number: 17189682.2
(22) Date of filing: 06.09.2017
(51) Int. Cl.: C08G 16/02, C08G 14/08, C14C 3/24, C14C 3/20

(54) **A METHOD FOR MANUFACTURING A LIGNIN-MODIFIED POLYPHENOLIC PRODUCT AND ITS USE FOR THE TREATMENT OF LEATHER AND SKIN**

(71) Applicant: Exploitatiemaatschappij Smit-Vecht B.V., 1382 LK Weesp (NL)
(72) Inventor: MA, Yujie, 1382 LK Weesp (NL); BERENDS, Petra Conny, 1382 LK Weesp (NL)
(74) Representative: Plaggenborg, Menko Bernard

(57) **Abstract**

The invention relates to a method for manufacturing a lignin-modified polyphenolic product to be used in the treatment of leather or skin, comprising the steps of: [1] reacting a hydroxybenzene compound with sulphuric acid and [2] diluting the reaction mixture with water;
wherein the method further comprises either:
[3a] adding urea to the reaction mixture obtained in step [2],
[4a] adding water insoluble lignin to the mixture obtained in step [3a], and
[5a] performing a condensation reaction by adding formaldehyde as aldehyde to obtain a water soluble hydroxybenzene-lignin-aldehyde polymer-based product,

or
[4b] adding water insoluble lignin to the reaction mixture obtained in step [2], and
[5b] performing a condensation reaction by adding glyoxylic acid as aldehyde to obtain a water soluble hydroxybenzene-lignin-aldehyde polymer-based product.

## Description

The present invention relates to a method for manufacturing a lignin-modified polyphenolic product comprising the steps according to the preamble of claim 1. The invention also relates to the use of the product for the treatment of leather and hide.

In the leather manufacturing process, raw hides undergo a series of pretreatments that may include soaking, (green) fleshing, unhairing, liming, lime splitting, deliming, bating, degreasing and pickling before the cleaned and altered collagen structure enters the tanning stage. Tanning alters animal collagen, the main component of skin in such a way that renders it resistance to heat and microorganism attack, which can be generally characterized by rises in the hydrothermal stability (shrinkage temperature) of the material.

Various tanning agents transform skin collagen by essentially crosslinking it, which may involve different mechanisms. Nowadays in the still dominating mineral tanning method, metal ions (mostly used being chromium ions) crosslink collagen structure through electrostatic interactions followed by complex formation. Other tanning methods, including vegetable tanning with vegetable extracts (e.g. mimosa, chesnut, tara) and synthetic reactive tanning using aldehydes work differently by either creating crosslinking sites through hydrogen bonding and hydrophobic interactions, or through covalent bond formation on the amine groups of the protein.

Syntans, referring to the range of synthetic polymeric materials capable of tanning, are typically aromatic and contain hydroxyl and sulfonate functionalities. This group of chemicals does not strictly include other resins and polymers (e.g. acrylates).

Typical syntans, being sulfonated condensation aromatic polymers (based on e.g. phenol or naphthalene) are essentially petro-based. Syntans are widely used in leather re-tanning process as part of the post-tanning (wet-end) treatments. Other wet-end processes include neutralization, dyeing and fat liquoring. In this stage of the process leather's organoleptic properties are significantly improved and largely defined. The drawbacks of phenolic syntans include toxicity during manufacturing and emission problems from phenol or formaldehyde monomers during leather's lifetime.

Improvements in syntan's petro-based nature are expected to reduce or eliminate these problems and contribute to a more sustainable leather value chain.

Lignin is a natural polyphenol derived from biomass that contains a combination of three monomers: p-coumaryl, coniferyl and sinapyl alcohol in p-hydroxylphenyl, guaïacyl and syringyl units, respectively. Ortho positions of the aromatic units are partially free in case of guaïacyl and p-hydroxylphenyl units, making the electrophilic substitution of these sites by aldehyde species possible. Recently, the similarities of lignin's highly complex aromatic structure to phenolic resins generate a wide interest in using it for partial replacement of phenol in the synthesis of these resins. However, there is no syntan available with a higher bio-based content made from phenol substitution by lignins in synthesizing this type of water-soluble phenolic polymer.

The invention aims at providing a method for manufacturing a phenolic syntan with a higher bio-based content and improved emission properties.

The invention further aims at providing usage scenarios of a synthetic tanning agent that improves the hydrothermal stability of leather or skin.

The invention further aims at providing a method for manufacturing a (re)tanning agent that imparts further organoleptic characteristics to leather.

The invention further aims at providing a method for manufacturing a synthetic retanning agent.

In addition, the invention seeks to find a synthetic tanning agent providing the above indicated aims.

The invention also aims at providing a method for tanning or retanning of leather or skin using a (re)tanning agent that is obtainable by means of the method according to the present invention.

Finally, the invention aims at providing a crust, treated with a (re)tanning agent that is obtainable by means of the method according to the present invention.

So as to obtain at least one of the above mentioned aims, the invention provides a method as mentioned in claim 1. This method has the advantage that an agent is manufactured that has at least one of the above advantages.

The invention therefore relates to a method for manufacturing a lignin-modified polyphenolic product, comprising the steps of:
[1] reacting a hydroxybenzene compound with sulphuric acid and [2] diluting the reaction mixture with water;
wherein the method further comprises either:
[3a] adding urea to the reaction mixture obtained in step [2], [4a] adding water insoluble lignin to the mixture obtained in step [3a], and [5a] performing a condensation reaction by adding formaldehyde as an aldehyde to obtain a water soluble hydroxybenzene-lignin-aldehyde polymer-based product,
   or
[4b] adding water insoluble lignin to the reaction mixture obtained in step [2], and [5b] performing a condensation reaction by adding glyoxylic acid as aldehyde to obtain a water soluble hydroxybenzene-lignin-aldehyde polymer-based product.

It is also shown that the retanning agent obtained according to the method of the present invention can be used advantageously in tanning processes as well.

The obtained polyphenolic product belongs to the group of phenolic (re)tanning agents that increases the hydrothermal stability of raw hides or pre-tanned hides. In addition, it also renders good organoleptic properties such as fullness and softness to the obtained leather.

In the present invention, lignin (for partial replacement of phenol) content can reach up to 40-50% based on the total weight of phenol and lignin. Previously, similar polymer-based products could only be made with 100% petro-based hydrobenzene compounds.

The lignin used in the present invention has not been modified at the available functional groups including the phenolic hydroxyls.

The degree of substitution of phenol with lignin depends on the type of lignin used, likely related to the origin/source of the lignin as well as its functional groups including phenolic hydroxyl content.

It is preferred in the present invention that after step [5a] or step [5b] the reaction mixture is diluted and the pH is adjusted to a value of 2.5 - 5. Such an aqueous solution can be applied in a leather or skin treatment process.

The condensation reaction of step [5a] or step [5b] is performed under acidic circumstances, preferably at a pH of below 4, preferably below 3.

It is preferred that the hydroxybenzene is chosen from phenol or cresol.

According to the present invention, the kind of lignin is not directly determining the results obtained in the leather treatment process, but an lignin that is insoluble at neutral to acidic conditions should be used in the present invention. As a consequence, it is preferred that the lignin is chosen from unsubstituted lignin or a lignin derivative, for example soda lignin (Green Value protobind 1000), kraft lignin (Suzano NewProd-FP 101/102, Indulin AT) and organosolv lignin (Ligno lignin).

A simple and efficient reaction is obtained when the lignin is added in powder form in step [4a] or step [4b]. The lignins chosen generally remain insoluble until after the initiation of step [5a] or step [5b].

According to a further preferred embodiment of the present invention, the reaction mixture obtained in step {5a] or [5b] is diluted with water until the solution has a solid content in the range of 35-50% w-w, preferably in the range of 38-45% w-w.

In step [1], the hydroxybenzene compound is melted and sulphuric acid is dosed into the melted hydroxybenzene compound. The following reaction conditions are applied when phenol is used as the hydroxybenzene compound. Melting preferably is performed at a temperature of about 40 °C. The reaction is then preferably performed at a temperature of about 100 °C by raising the temperature after dosing the sulphuric acid into the melted hydroxybenzene compound.

According to a further embodiment, the invention relates to the use of a water soluble hydroxybenzene-lignin-aldehyde polyphenolic product obtainable according to the method of the present invention in skin or leather treatment, preferably in a tanning or a retanning treatment.

According to a still further embodiment, the present invention relates to a water soluble hydroxybenzene-lignin-aldehyde polyphenolic product obtainable according to the method of the present invention, the final product having a free phenol content when produced according to the formaldehyde route of less than 10 ppm and having a free phenol content when produced according to the glyoxylic acid route of less than 15 ppm. The very low free phenol content is advantageous in reducing leather's overall emission problems.

According to the present invention, an additional advantage is obtained especially when applying glyoxylic acid as an aldehyde by following step [5b]. Leather products treated thus show greatly reduced formaldehyde emission.

A still further embodiment of the present invention relates to a method for treating a skin or leather comprising the step of treating said skin or said leather with a water soluble hydroxybenzene-lignin-aldehyde polyphenolic product obtainable according to the method of the present invention for at least one of raising its shrinkage temperature, improving its softness, improving its fullness, improving its grain tightness.

Finally, the invention relates to a skin or leather, treated with a water soluble hydroxybenzene-lignin-aldehyde polyphenolic product obtainable according to the method of the present invention.

Hereafter, the invention will be further described by means of examples. The examples relate to methods for manufacturing the water soluble hydroxybenzene-lignin-aldehyde polyphenolic product as well as to examples of treating skin and leather.

### GENERAL PRODUCT PROCEDURE

### Example 1 (formaldehyde)

0.77-0.86 mole phenol is first melted in a three-neck round bottom flask at 40 °C. With gentle stirring, 0.91-1.04 mole sulfuric acid 96% is dosed slowly into the flask before the temperature is raised to 100 °C. The reaction is continued at this temperature for 1hr before cooling down to 95 °C. The above reaction mixture is diluted to a 70-75% solution with water. When the temperature reaches 80°C, 0.87-0.93 mole urea is added.

After the fully dissolution of the urea 28-56 g of lignin powder (this can be any type of lignin from the above list) is slowly added and the temperature lowered from 70 to 65 °C. Next, the condensation with a total of 1.3-1.68 mole of formaldehyde 37% is done by batch dosing steps at 65°C followed by stirring for at least an additional 30 min at 65-71°C. The mixture is first diluted with water, cooled down to 50°C and finally pH adjusted by dosing sodium hydroxide 50% and dicarboxylic acid to reach a pH of 3-4. The product concentration is adjusted with water to reach a solid content of about 40%.

The final product is a brown clear liquid with solid content of 38-45%, 10% pH of 3.0-4.5, acid values of 48-65 mg KOH/g and ash values of 8-15%. The free-phenol of the product is <10 ppm.

### Example 2 (glyoxilic acid)

0.77-0.86 mole phenol is first melted in a three-neck round bottom flask at 40 °C. With gentle stirring, 0.45-0.91 mole sulfuric acid 96% is dosed slowly into the flask before the temperature is raised to 100 °C. The reaction is continued at this temperature for 1hr before cooling down to 95 °C. The above reaction mixture is diluted to a 70-75% solution with water.

Afterwards, 28-56 g of lignin powder (this can be any type of lignin from the above list) is slowly added at 80 °C. Next, the condensation reaction with a total of 0.69-0.96 mole glyoxylic acid 50% is done by batch dosing steps at 80-100 °C followed by stirring for another 3-6 hours at 100 °C. The mixture is first diluted with water, cooled down to 50 °C and finally pH adjusted by dosing sodium hydroxide 50% to reach a pH of 3-4. The product concentration is adjusted with water to reach a solid content of about 40%.

### LEATHER TANNING/RETANNING TRIALS

### Example 3: Increasing the shrinkage temperature of wet white leather

Wet white leather pre-tanned with glutaraldehyde that presents a typical shrinkage temperature of 68-70 °C is treated with the lignin-phenol-urea-formaldehyde or lignin- phenol-glyoxylic acid condensate product prepared by the methods described in the above examples 1 and 2 with an amount between 10-30% based on shaved weight. An increase of the shrinkage temperature (Ts) of the obtained leather by up to 12 °C is measured. Within this range, the higher the amount of the polymer used, the higher the shrinkage temperature of the final leather will be.

### Example 4: Used as (co-)tanning agent for the (pre) tanning of hide

Pickled pelt is treated with the lignin-phenol-glyoxylic acid condensate product prepared by the methods described in example 2 with an amount between 50-70% based on pelt weight in combination with a naphthalene sulfonate polymer containing synthetic tanning agents with an amount of 3% based on pelt weight. The measured shrinkage temperature of the final leather is 75 °C.

### Example 5: Used as retanning agents for chrome-tanned shoe upper leather

Chrome-tanned wet blue leather is washed and neutralized to pH 4.5 before the lignin-modified polymeric product is applied at 8-24% (based on shaved weight) together with a polyacrylic acid polymer and a dyestuff of choice at 45 °C. After fixation using formic acid and washing, the process is continued with the application of a polyacrylic acid polymer (e.g. Syntan RS 540 from Smit en Zoon) together with fat liquoring agents consisting of synthetic and sulphated natural oil (e.g. POLYOL NFO and/or SYNTHOL SL335 from Smit en Zoon) at 45°C, finished with cold wash, drying and staking. The resulted leather presents excellent fullness and grain tightness.

### Example 6: Used as retanning agents for chrome-free shoe upper leather

Chrome-free leather is treated with a float containing up to 30% (based on shaved weight) of the lignin-modified polymeric product, a phenol sulphonic acid condensate product containing neutralizing agent (e.g. SYNTAN NN555 from Smit en Zoon), some traditional phenol sulphonic acid condensate retanning agents (e.g. SYNTAN SF156 from Smit en Zoon), emulsified natural phospholipids (e.g. POLYOL HS818 from Smit en Zoon), emulsified synthetic oils (e.g. SYNTHOL WP from Smit en Zoon), a formaldehyde-free dicyandiamide resin based retanning agent (e.g. SAFETAN DD001 from Smit en Zoon) and dyestuff. After fixation with formic acid and washing, the process is continued with a float containing emulsified natural phospholipids (e.g. POLYOL HS818 from Smit en Zoon), emulsified synthetic oils (e.g. SYNTHOL WP from Smit en Zoon), natural and synthetic phosphate fatty polymer (e.g. SYNTHOL FL327 from Smit en Zoon), and a zeolite based retanning agent (e.g. SYNTAN ZLR100 from Smit en Zoon) at 45°C, finished with cold wash, drying and staking. The resulted leather presents extremely smooth grains and a nice and soft touch.

### GPC DATA ON LIGNIN AND LIGNIN-PHENOL-UREA-FORMALDEHYDE POLYMER

Alkaline GPC experimental details: lignin and lignin-phenol-urea-formaldehyde polyphenolic product samples are dissolved in 0.5 M NaOH before injected into a column with ethylene glycol-methacrylate copolymer TSK gel and eluted with the same solvent. Standards for calibration of the molar mass distribution are sodium-polystyrene sulfonates with Mw range of 891 to 976,000 dalton.

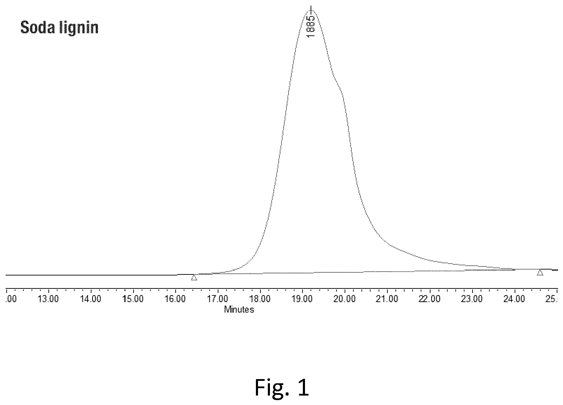

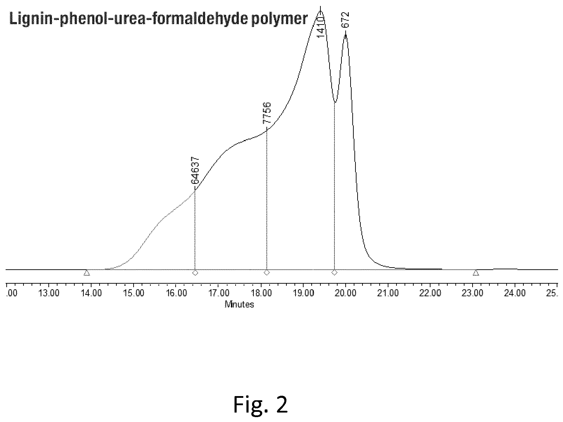

Enclosed are the GPC data of a soda lignin sample (Fig. 1, GreenValue Protobind 1000) and a sample of lignin-phenol-urea-formaldehyde polymer-based product based on this soda lignin sample prepared following the procedure described in Example 1 (Fig. 2). The appearance of multiple peaks with shorter retention times indicates the formation of higher Mw species after the condensation reaction. The Mw is not calculated in this case due to the presence of multiple peaks in the GPC chromatograph.

### POSSIBLE STRUCTURE COMPONENTS OF THE OBTAINED LIGNIN-PHENOL-UREA-FORMALDEHYDE POLYPHENOLIC PRODUCT

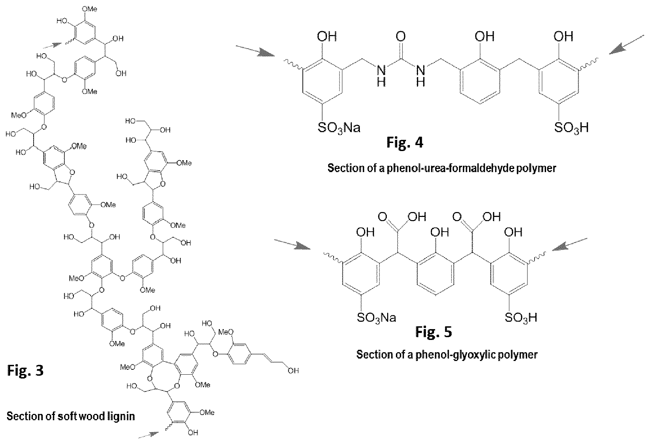

Since there is not one unique and well-defined lignin structure, the following figure shows only examples of possible structure components of the polymer made. The present invention therefore is in no way limited to the shown structure, that only serves as a basis. Please note that only an example of a section of the lignin (in this case soft wood lignin, Fig. 4) and the phenol-urea-formaldehyde structure (Fig. 4) or phenol-glyoxylic acid polymer (Fig. 5) structure are presented.

Red arrows in Fig. 3, Fig. 4 and Fig. 5 indicate where the linkages to lignin or another structural components are expected.

The invention is not limited to the embodiments as mentioned above and as shown in the drawings. The invention is limited by the claims only.

The invention also relates to all combinations of features described here independently of each other.

## Claims

1. A method for manufacturing a lignin-modified polyphenolic product to be used in the treatment of leather or skin, comprising the steps of:
[1] reacting a hydroxybenzene compound with sulphuric acid and
[2] diluting the reaction mixture with water;
wherein the method further comprises either:
[3a] adding urea to the reaction mixture obtained in step [2],
[4a] adding water insoluble lignin to the mixture obtained in step [3a], and
[5a] performing a condensation reaction by adding formaldehyde as aldehyde to obtain a water soluble hydroxybenzene-lignin-aldehyde polymer-based product,
or
[4b] adding water insoluble lignin to the reaction mixture obtained in step [2], and
[5b] performing a condensation reaction by adding glyoxylic acid as aldehyde to obtain a water soluble hydroxybenzene-lignin-aldehyde polymer-based product.

2. A method according to claim 1, wherein after step [5a] or step [5b] the reaction mixture is diluted and pH adjusted to a pH 2.5 - 5.

3. A method according to claim 1, wherein the condensation reaction of step [5a] or step [5b] is performed under acidic circumstances, preferably at a pH of below 4, preferably below 3.

4. A method according to claim 1, wherein the hydroxybenzene is chosen from phenol or cresol.

5. A method according to claim 1, wherein the lignin is chosen from unsubstituted lignin or a lignin derivative, for example soda lignin, kraft lignin and organosolv lignin.

6. A method according to claim 1, wherein the lignin is added in powder form in step [4a] or step [4b].

7. A method according to claim 2, wherein after diluting with water the solution has a solid content in the range of from 35-50% w-w.

8. A method according to claim 1, wherein in step [1] the hydroxybenzene compound is melted and sulphuric acid is dosed into the melted hydroxybenzene compound.

9. Use of a water soluble hydroxybenzene-lignin-aldehyde polymer obtainable according to any of claims 1 to 8 in skin or leather treatment, preferably in a tanning or a retanning treatment.

10. A water soluble hydroxybenzene-lignin-aldehyde polyphenolic product obtainable according to any of claims 1 to 8 having a free phenol content of less than 15 ppm, preferably less than 10 ppm.

11. A method for treating a skin or leather comprising the step of contacting said skin or said leather with a product based on a water soluble hydroxybenzene-lignin-aldehyde polyphenolic product obtainable according to any of claims 1 to 8 for at least one of raising its shrinkage temperature, improving its softness, improving its fullness, improving its grain tightness.

12. A skin or leather, treated with a water soluble hydroxybenzene-lignin-aldehyde polyphenolic product obtainable according to any of claims 1 to 8.
